# EUROPEAN PATENT APPLICATION

(11) **EP 4 723 363 A1**
(43) Date of publication of application: **08.04.2026**
(21) Application number: 24934220.5
(22) Date of filing: 04.04.2024
(51) Int. Cl.: H01M 50/691, G01L 19/08, G01L 19/14, H02J 50/10, G08C 17/02, B08B 3/04

(54) **WATER PRESSURE MEASURING DEVICE AND WATER PRESSURE ANALYZING SYSTEM FOR BATTERY CLEANING PROCESS EQUIPMENT**

(71) Applicant: LG Energy Solution, Ltd., Seoul 07335 (KR)
(72) Inventor: LEE, Yonggu, Daejeon 34122 (KR); KIM, Hak Kyun, Daejeon 34122 (KR); PARK, Jongsik, Daejeon 34122 (KR); LEE, Chohee, Daejeon 34122 (KR)
(74) Representative: Goddar, Heinz J.
(86) International application number: PCT/KR2024/004413
(87) International publication number: WO 2025/211483

(57) **Abstract**

A water pressure measuring device according to an embodiment of the present invention is a device for measuring the water pressure of a cleaning solution sprayed from battery cleaning process equipment. The water pressure measuring device may include: a housing having a shape corresponding to the housing of a battery cell and having an inner space; a sensor assembly disposed on the outer surface of the housing to sense the water pressure of the cleaning solution; and a control unit disposed in the inner space of the housing to collect water pressure sensing data from the sensor assembly.

## Description

### [Technical Field]

The present disclosure relates to a water pressure measurement apparatus and a water pressure analysis system, and more particularly, to a water pressure measurement apparatus that measures water pressure of cleaning liquid sprayed from battery cleaning process equipment and a water pressure analysis system that analyzes sensing data measured by the water pressure measurement apparatus.

### [Background Art]

A secondary battery is a battery that can be recharged and reused even after being discharged. The secondary battery is used as an energy source for small devices such as mobile phones, tablet PCs and vacuum cleaners, and also used as an energy source for medium and large devices such as an energy storage system (ESS) for automobiles and smart grids.

The secondary battery is applied to a system in a form of an assembly such as a battery module in which a plurality of battery cells is connected in series and parallel or a battery pack in which battery modules are connected in series and parallel according to system requirements. A high-capacity battery system with multiple battery packs connected in parallel may be applied for medium-to-large devices such as electric vehicles to meet the required capacity of the device.

Secondary batteries may be classified into can-type batteries in which the electrode assembly is built into a cylindrical metal can and pouch-type batteries in which the electrode assembly is built in a pouch-shaped case. In general, cylindrical can-type batteries are known to have relatively large capacity and high structural stability.

Cylindrical battery cells are manufactured by placing an electrode assembly with a wound structure in a cylindrical can, injecting electrolyte into the can, and then coupling a cap assembly with electrode terminals to the open top of the can. A protruding positive terminal may be formed in an upper central region of the cap assembly and a negative terminal may be formed in another portion of the metal can. Cylindrical battery cells may be sealed through a crimping process after the cap assembly is joined to the open top of the can.

In the process of manufacturing a cylindrical battery cell, electrolyte may get on the electrode terminals or metal can, which may lead to a possibility that the battery will corrode. To prevent corrosion caused by foreign substances, foreign substances may be removed by spraying cleaning liquid (e.g., washing water) onto the outer surface of the battery cell during the cleaning process.

Generally, a method of measuring internal pressure of a pipe through which the cleaning liquid is sprayed is used as a technology to diagnose whether the cleaning process equipment sprays the cleaning solution at intended water pressure. However, according to this prior art, a difference may occur between the measured pressure inside the pipe and the water pressure of the cleaning liquid discharged from the spray nozzle, thereby showing limited reliability. In addition, if internal pressures of all pipes through which the cleaning liquid is sprayed are measured, the design cost of a system for water pressure monitoring can be significantly increased, and thus, the internal pressure of only one pipe is generally monitored.

Accordingly, as a technology to solve the problems of the prior art, there is a need for a hydraulic pressure measurement apparatus and a hydraulic pressure analysis system using the same that can accurately measure hydraulic pressure of the cleaning liquid sprayed from battery cleaning process equipment and that can be implemented at low cost.

### [Detailed Description of the Invention]

### [Technical Problem]

To obviate one or more problems of the related art, aspects of the present disclosure provide a hydraulic pressure measurement apparatus that measures hydraulic pressure of cleaning liquid sprayed from battery cleaning process equipment.

To obviate one or more problems of the related art, aspects of the present disclosure also provide a hydraulic pressure analysis system that analyzes sensing data measured by the hydraulic pressure measurement apparatus.

### [Technical Solution]

In order to achieve the objective of the present disclosure, an apparatus for measuring hydraulic pressure of cleaning liquid sprayed from a battery cleaning process equipment is presented, which may include a housing having a shape corresponding to a housing of a battery cell and including space formed therein; a sensor assembly provided on the outer surface of the housing to sense the hydraulic pressure of the cleaning liquid; and a controller provided in the space inside the housing and configured to collect hydraulic pressure sensing data from the sensor assembly.

The sensor assembly may include a plurality of hydraulic pressure sensors; and a sensor support structure to which the plurality of hydraulic pressure sensors are fixedly coupled.

The the sensor support structure may be configured to surround the outer surface of the housing.

The sensor support structure may include an upper part, a lower part, and a side part, and a plurality of hydraulic pressure sensors may be fixedly coupled to each of the upper part, the lower part, and the side part.

The sensor support structure may be made of elastic material.

The sensor support structure may be formed as a planar structure or a net structure.

The plurality of hydraulic pressure sensors may form a certain pattern and each of the plurality of hydraulic pressure sensors may be fixedly coupled to a predefined position so that the sensor support structure is formed.

The sensor assembly may further include a connector electrically connected to the plurality of hydraulic pressure sensors. Here, the connector may be inserted into a through hole formed on one side of the housing and electrically connected to the controller.

The apparatus for measuring hydraulic pressure may further include a control board which is provided in the space inside the housing and to which the controller is fixedly coupled.

The control board may be configured to be fixed by slidingly coupled to a guide rail formed on the inner surface of the housing.

The apparatus for measuring hydraulic pressure may further include a power supplier provided in the space inside the housing to supply power. Here, the power supplier may include a battery; and a wireless charge device for charging the battery.

The apparatus for measuring hydraulic pressure may further include a wireless communication module which is provided in the space inside the housing and transmits the collected hydraulic pressure sensing data to an external hydraulic pressure analysis apparatus.

According to another aspect of the present disclosure, a hydraulic pressure analysis system for battery cleaning process equipment may include a hydraulic pressure measurement apparatus having a shape corresponding to a housing of a battery cell and equipped with a plurality of hydraulic pressure measuring sensors on the outer surface; and a hydraulic pressure analysis apparatus that receives hydraulic pressure sensing data from the hydraulic pressure measurement apparatus and diagnoses whether there is an abnormality in the battery cleaning process equipment.

The hydraulic pressure analysis apparatus may generate hydraulic pressure information for each coordinate defined on outer surface of the battery cell based on the received hydraulic pressure sensing data and identifiers of respective hydraulic pressure measuring sensors.

The hydraulic pressure analysis apparatus may diagnose abnormalities in the battery cleaning process equipment based on the hydraulic pressure information for each location coordinate.

### [Advantageous Effects]

According to the aspects of the present disclosure as described above, the hydraulic pressure of the cleaning liquid sprayed from a battery cleaning process equipment can be accurately measured.

In addition, according to the aspects of the present disclosure as described above, it is possible to implement a hydraulic pressure measurement apparatus and a hydraulic pressure analysis system at low cost.

### [Brief Description of the Drawings]

FIG. 1 is a diagram of battery cleaning process equipment.
FIG. 2 is a block diagram of a hydraulic pressure analysis system according to aspects of the present disclosure.
FIG. 3 shows a hydraulic pressure measurement apparatus according to aspects of the present disclosure.
FIG. 4 is an exploded perspective view of a hydraulic pressure measurement apparatus according to aspects of the present disclosure.
FIG. 5 is an exploded view of a sensor support structure according to aspects of the present disclosure.
FIG. 6 is an operational flowchart of the hydraulic pressure analysis method according to aspects of the present disclosure.
   100: hydraulic pressure measurement apparatus
   110: housing
   111: main body
   112: cover
   120: sensor assembly
   121: hydraulic pressure measurement sensor
   122 ~ 124: sensor support structure
   125: connector
   130: control board
   131: **controller**
   141: battery
   142: wireless charge coil cover
   143: wireless charge coil
   150: waterproof packing
   200: hydraulic pressure analysis apparatus

### [Best Modes for Practicing the Disclosure]

The present disclosure may be modified in various forms and have various aspects, and specific aspects thereof are shown by way of example in the drawings and will be described in detail below. It should be understood, however, that there is no intent to limit the present disclosure to the specific aspects, but on the contrary, the present disclosure is to cover all modifications, equivalents, and alternatives falling within the spirit and technical scope of the present disclosure. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific aspects only and are not intended to limit the present disclosure. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present disclosure belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

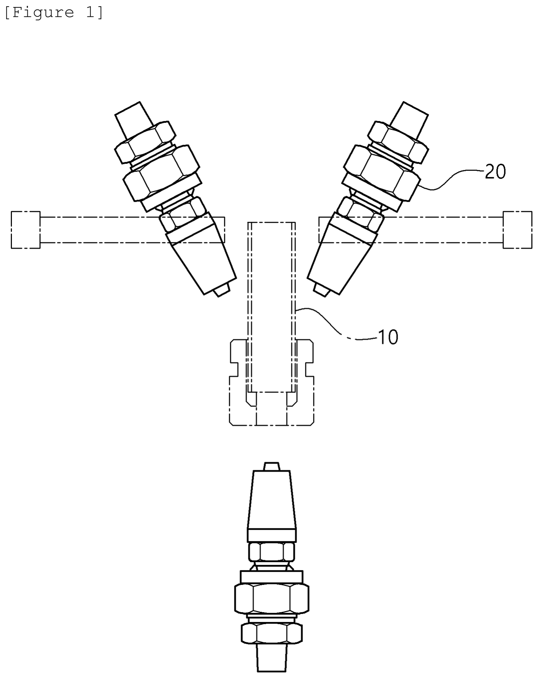

FIG. 1 is a diagram for explaining battery cleaning process equipment.

Referring to FIG. 1, the battery cleaning process equipment sprays cleaning liquid on the outer surface of a battery cell 10 through a plurality of spray nozzles 20 to remove foreign substances on the outer surface of the battery cell 10.

Each of the plurality of battery cells 10 may be mounted on a carrier and transported, and may be moved to a position where the plurality of spray nozzles 20 are provided. Each of the spray nozzles 20 is fixedly disposed at a predefined position and at a predefined angle, and can spray the cleaning liquid toward the outer surface of each battery cell 10 that is sequentially transferred.

After the cleaning process using the cleaning process equipment, the battery cell 10 is moved to a blower equipment, and the blower equipment sprays air on the outer surface of the battery cell 10 to remove the cleaning liquid. Thereafter, the battery cell 10 is moved to drying equipment, and the drying equipment sprays high-temperature air on the outer surface of the battery cell 10 to dry the battery cell.

In order for the cleaning process using the cleaning process equipment to be effectively performed, the cleaning liquid must be sprayed onto the outer surface of the battery cell 10 with uniform hydraulic pressure. For example, if the cleaning solution is sprayed only in a specific area at a relatively high hydraulic pressure or only in a specific area at a relatively low hydraulic pressure, foreign substances formed on the outer surface of the battery cell cannot be completely removed.

In order to prevent this phenomenon, it is necessary to precisely measure the hydraulic pressure of the cleaning liquid sprayed from each of the plurality of spray nozzles 20 and calibrate the cleaning process equipment based on the measured values. In order to monitor the hydraulic pressure of the cleaning liquid, generally, a method is used of which the hydraulic pressure is sensed inside the spray nozzle 20 or inside a pipe connected to the spray nozzle 20 and the hydraulic pressure of the sprayed cleaning liquid is indirectly determined based on the sensed value. However, in the case of this prior art, an error may occur between the measured sensing value and the hydraulic pressure of the cleaning liquid discharged from the spray nozzle 20, which leads to a limit to precisely calibrating the cleaning process equipment. In addition, when measuring hydraulic pressure for only one spray nozzle 20 because of the design cost of the hydraulic pressure monitoring system, the hydraulic pressure distribution in all directions of the battery cell 10 cannot be determined, and thus, it is difficult to use the sensed value for correction of the cleaning process equipment.

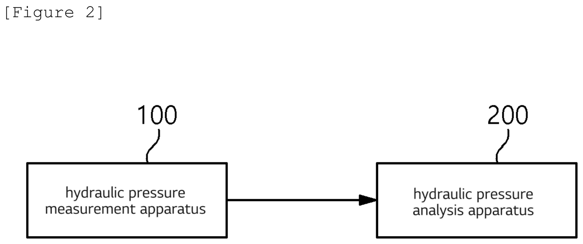

The present disclosure is presented to solve this problem of the prior art and proposes a hydraulic pressure measurement apparatus that has a shape corresponding to a housing of a battery cell and is equipped with a plurality of hydraulic pressure measuring sensors on the outer surface of the battery cell and also a hydraulic pressure analysis system using the hydraulic pressure measurement apparatus. In the following, various aspects of the present disclosure will be described in detail with reference to FIGS. 2 to 6.

FIG. 2 is a block diagram of a hydraulic pressure analysis system according to aspects of the present disclosure.

Referring to FIG. 2, a hydraulic pressure analysis system according to aspects of the present disclosure may be configured to include a hydraulic pressure measurement apparatus 100 and a hydraulic pressure analysis apparatus 200.

The hydraulic pressure measurement apparatus 100 is a device that measures the hydraulic pressure of cleaning liquid that is input into the cleaning process equipment and sprayed from spray nozzles of the cleaning process equipment.

The hydraulic pressure measurement apparatus 100 may have a shape corresponding to a housing of a battery cell and may be configured with a plurality of hydraulic pressure measuring sensors provided on its outer surface. In other words, the hydraulic pressure measurement apparatus 100 according to aspects of the present disclosure is manufactured in the same shape as the battery cell being cleaned through the cleaning process step and is configured to measure the hydraulic pressure distribution of the cleaning liquid which is sprayed onto the outer surface of the actual battery cell through a plurality of hydraulic pressure measuring sensors provided on the outer surface.

The hydraulic pressure measurement apparatus 100 may be configured to include a housing formed in the same shape as the housing of the battery cell, a plurality of hydraulic pressure measuring sensors provided on the outer surface of the housing, and a controller provided in space inside the housing.

The controller provided inside the housing is electrically connected to a plurality of hydraulic pressure measuring sensors, and may collect sensing data and transmit the collected sensing data to the hydraulic pressure analysis apparatus 200 through a communication module provided inside the housing. Meanwhile, the detailed structure and operation of the hydraulic pressure measurement apparatus 100 will be described in the following.

The hydraulic pressure measurement apparatus 100 may be disposed between actual battery cells which are transported through a carrier of the cleaning process equipment and may be transported together with the actual batteries so that the cleaning liquid can be sprayed onto the hydraulic pressure measurement apparatus and hydraulic pressure of the cleaning liquid sprayed during the cleaning process can be measured.

The hydraulic pressure analysis apparatus 200 may be a computing device that receives hydraulic pressure sensing data from the hydraulic pressure measurement apparatus 100 and analyzes the hydraulic pressure using the received hydraulic pressure sensing data. Here, the hydraulic pressure analysis apparatus 200 may generate hydraulic pressure distribution information (e.g., pressure profile, density distribution data, etc.) using hydraulic pressure sensing data received from the hydraulic pressure measurement apparatus 100 and may diagnose abnormalities (e.g., a specific injection nozzle is clogged, etc) of the cleaning process equipment.

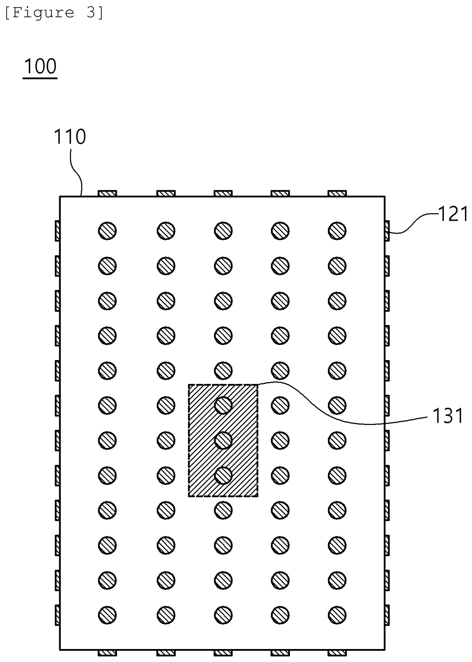

FIG. 3 shows a hydraulic pressure measurement apparatus according to aspects of the present disclosure.

Referring to FIG. 3, the hydraulic pressure measurement apparatus 100 may be configured to include a housing 110, a plurality of hydraulic pressure measuring sensors 121, and a controller 131.

The housing 110 may be formed in a shape that corresponds to a housing of a battery cell. For example, if a battery cell applied to the cleaning process equipment is a cylindrical battery cell of the 4680 standard (diameter 46 mm, height 80 mm), the housing 110 of the hydraulic pressure measurement apparatus 100 can be manufactured in the same standard shape (diameter 46mm, height 80mm) as a housing (metal can) of the actual cylindrical battery cell. Since the housing 110 of the hydraulic pressure measurement apparatus 100 is formed in the same shape as the actual battery cell, the hydraulic pressure distribution of the cleaning fluid sprayed onto the battery cell during the cleaning process can be measured more accurately.

A plurality of hydraulic pressure measuring sensors 121 may be provided on the outer surface of the housing 110. Here, the hydraulic pressure measuring sensor 121 is a device that outputs sensing data corresponding to the pressure applied by the cleaning liquid. The hydraulic pressure measuring sensor 121 may be implemented with various known pressure sensors or tactile sensors such as capacitive sensors and piezoelectric sensors, but the scope of the present disclosure is not limited to these entities.

The plurality of hydraulic pressure measuring sensors 121 may form a certain pattern and be disposed at predefined positions, respectively. For example, as shown in FIG. 3, a plurality of hydraulic pressure measuring sensors 121 may be disposed at regular intervals on the top, side, and bottom of the housing 110, respectively.

Each of the plurality of hydraulic pressure measuring sensors 121 may be fixedly coupled to a sensor support structure which is formed of a planar structure or a net-like structure. Here, the sensor support structure may be configured to surround the outer surface of the housing 110, so that a plurality of hydraulic pressure measuring sensors 121 can be disposed on the outer surface of the housing 110.

The controller 131 may be a device that collects hydraulic pressure sensing data output from a plurality of hydraulic pressure measuring sensors 121 and transmits the collected hydraulic pressure sensing data to the hydraulic pressure analysis apparatus 200.

The controller 131 may be provided in space inside the housing 110. The controller 131 may be fixedly coupled to a control board (for example, a printed circuit board (PCB) board), and the control board may be fixedly coupled to inner space of the housing.

The controller 131 may be electrically connected to a plurality of hydraulic pressure measuring sensors 121 and configured to receive hydraulic pressure sensing data from the hydraulic pressure measuring sensors 121. For example, a connector electrically connected to each of the hydraulic pressure measuring sensors 121 may be formed on the control board and is fastened to a connector mounting groove which is electrically connected to the controller 131, so that the controller 131 and the hydraulic pressure measurement sensor 121 can be electrically connected.

The controller 131 may transmit the collected hydraulic pressure sensing data to the hydraulic pressure analysis apparatus 200 through a communication module. For example, the controller 131 may be configured to transmit hydraulic pressure sensing data to the hydraulic pressure analysis apparatus 200 through a wireless communication module provided on the control board.

Inside the housing 110, a power supplier may be provided to supply power to each component of the hydraulic pressure measurement apparatus 100. For example, a battery may be provided inside the housing 110 to supply power to each component of the hydraulic pressure measurement apparatus 100 and a wireless charge device (e.g., wireless charge coil, etc.) may be provided to charge the battery.

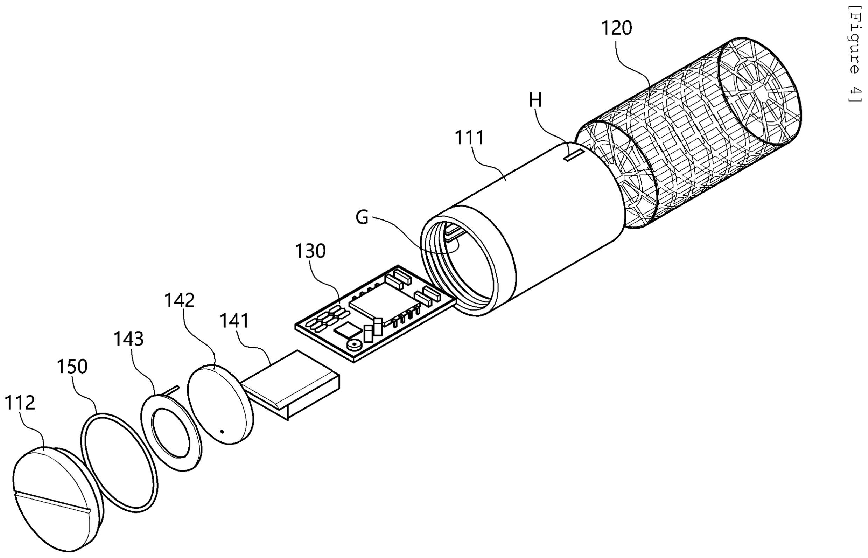

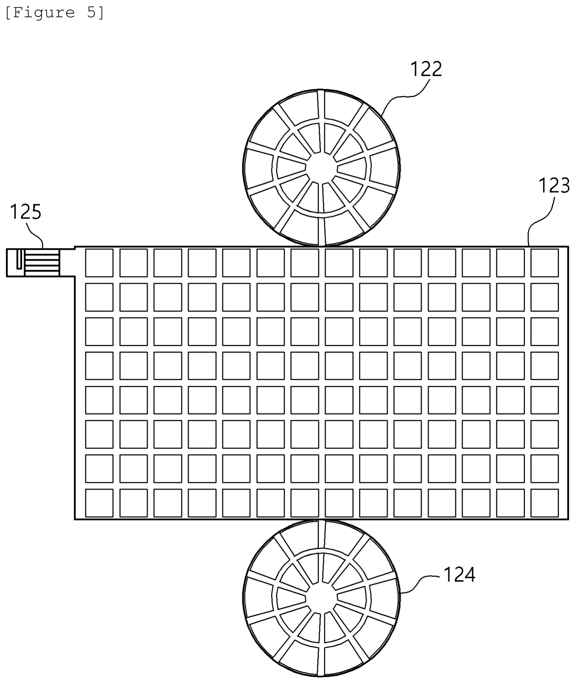

FIG. 4 is an exploded perspective view of a hydraulic pressure measurement apparatus according to aspects of the present disclosure and FIG. 5 is an exploded view of a sensor support structure according to aspects of the present disclosure. Specifically, FIGS. 4 and 5 are examples of implementation of a hydraulic pressure measurement apparatus according to aspects of the present disclosure. Hereinafter, with reference to FIGS. 4 and 5, the structure and operation of the hydraulic pressure measurement apparatus according to various aspects of the present disclosure will be described in detail.

The housing 110 of the hydraulic pressure measurement apparatus may include a main body 111 and a cover 112. For example, referring to FIG. 4, the cover 112 may be configured to be screwed and sealed on the top of the cylindrical main body 111. Here, the housing 110, in which the main body 110 and the cover 112 are combined, may be formed in the same shape as the actual battery cell.

The sensor assembly 120 may include a plurality of hydraulic pressure measuring sensors 121, sensor support structures 122 to 124, and a connector 125.

A plurality of hydraulic pressure measuring sensors 121 may be fixedly coupled to the sensor support structures 122 to 124. Here, each of the plurality of hydraulic pressure measuring sensors 121 may be fixedly coupled to a predefined position on the sensor support structure to form a certain pattern.

The sensor support structure may be formed in a shape corresponding to the housing 110 and may be configured to surround the outer surface of the housing 110. Here, the sensor support structure may be configured to include an upper surface portion 122, a lower surface portion 124, and a side portion 123, as shown in FIG. 5. The upper surface portion 122, the lower surface portion 124, and the side portion 123 may be configured to make face-to-face contact with the upper surface, the lower surface, and the side surface of the housing 110, respectively. A plurality of hydraulic pressure measuring sensors may be fixedly coupled to the upper surface 122, the lower surface 124, and the side surface 123 at regular intervals, and may be distributed and disposed on the outer surface of the housing 110.

In aspects, the sensor support structures 122 - 124 may be formed as a planar structure or a net structure. For example, the upper surface 122, the lower surface 124, and the side surface 123 of the sensor support structure are formed as a planar structure, hydraulic pressure measuring sensors are fixedly coupled to one surface, and conductor lines are built into the planar structure so that the hydraulic pressure measuring sensors and the connector 125 can be electrically connected through the conductor line. For another example, the upper surface 122, the lower surface 124, and the side surface 123 of the sensor support structure are formed of a net structure in which covered wires form a net structure, and the hydraulic pressure measuring sensors and connector 125 may be configured to be electrically connected through the covered wires.

In an aspect, the sensor support structures 122-124 may be formed from an elastic material. According to this aspect, the sensor support structure may be more easily coupled to the housing 110.

The control board 130 may be fixed to a specific location inside the housing 110. Here, the control board 130 may be configured to be slidably coupled to and fixed to a guide rail G formed in a longitudinal direction on the inner surface of the main body 111, as shown in FIG. 4.

A controller 131, a communication module, a memory, a wireless charge receiver, and a connector mounting groove may be mounted on one side of the control board 130.

The controller 131 may collect hydraulic pressure sensing data output from the plurality of hydraulic pressure measuring sensors 121 and transmit the collected hydraulic pressure sensing data to the hydraulic pressure analysis apparatus 200.

The controller 131 may be electrically connected to the plurality of hydraulic pressure measuring sensors 121 and receive hydraulic pressure sensing data from the hydraulic pressure measuring sensors 121.

Referring to FIG. 5, the connector 125 may be electrically connected to each of the hydraulic pressure measuring sensors 121 and may be configured in an extended part of the side portion 123 of the sensor support structure 120. In addition, referring to FIG. 4, the body portion 111 may have a through hole (H) formed on one side into which a connector can be inserted. Here, when the sensor assembly 120 is coupled to surround the outer surface of the housing 110, the connector 125 may be inserted into a through hole formed at a position corresponding to the connector 125 and be fastened to the connector mounting groove (not shown) which is mounted on the control board 130. A terminal formed inside the connector mounting groove is configured to be electrically connected to the controller 131, so that the controller 131 and the hydraulic pressure measurement sensors 121 can be electrically connected.

The controller 131 may transmit hydraulic pressure sensing data received from the hydraulic pressure sensors to the hydraulic pressure analysis apparatus 200 through a communication module. Here, the communication module may be configured as a wireless communication module (e.g., Bluetooth module, etc.) and the controller 131 may transmit the water sensing data to the hydraulic pressure analysis apparatus 200 through the wireless communication module after the cleaning process is completed.

Inside the housing 110, a power supplier may be provided to supply power to each component of the hydraulic pressure measurement apparatus 100. As shown in FIG. 4, the power supplier may be configured by sequentially stacking and combining a battery 141, a wireless charging coil cover 142, and a wireless charge coil 143. The battery 141 may be electrically connected to the control board 130 to supply power.

In addition, a waterproof packing 150 may be provided inside the housing 110 to prevent inflow of cleaning liquid. As shown in FIG. 4, the waterproof packing 150 may be disposed at a coupling position of the main body 111 and the cover 112, and seal the housing 120 when the main body 111 and the cover 112 are coupled, therby preventing internal inflow of the cleaning liquid.

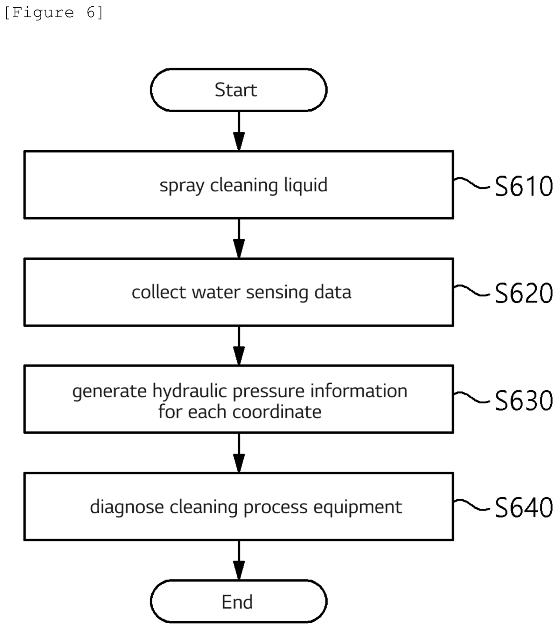

FIG. 6 is an operational flowchart of the hydraulic pressure analysis method according to aspects of the present disclosure.

When the hydraulic pressure measurement apparatus 100 is mounted on a carrier of the cleaning process equipment, sequentially transported together with battery cells, and moved to a position of the spray nozzle, cleaning liquid may be sprayed onto the hydraulic pressure measurement apparatus 100 (S610).

The hydraulic pressure measurement apparatus 100 may collect water sensing data generated through a plurality of hydraulic pressure measuring sensors distributed on the outer surface of the hydraulic pressure measurement apparatus 100 (S620).

The hydraulic pressure analysis apparatus 200 may receive hydraulic pressure sensing data from the hydraulic pressure measurement apparatus 100 and use the received hydraulic pressure sensing data to generate hydraulic pressure information for each coordinate defined on the outer surface of the battery cell (S630). Here, the hydraulic pressure analysis apparatus 200 may specify a location of each hydraulic pressure measurement sensor based on the identifier of each of the hydraulic pressure measuring sensors and generate hydraulic pressure information for each coordinate based on the hydraulic pressure sensing value and the position coordinate corresponding to the sensing value. Here, the generated hydraulic pressure information for each coordinate may include pressure profile and density distribution data.

The hydraulic pressure analysis apparatus 200 may diagnose whether there is an abnormality in the cleaning process equipment based on the hydraulic pressure information for each generated coordinate (S640). For example, if the hydraulic pressure at a specific location is outside a predefined limit range, it may be determined that an abnormality has occurred in the spray nozzle corresponding to the location.

According to the various aspects of the present disclosure as described above, it is possible to accurately measure the hydraulic pressure of cleaning liquid sprayed from battery cleaning process equipment, and it is also possible to implement a hydraulic pressure measurement apparatus and a hydraulic pressure analysis system at low cost.

Although some aspects of the disclosure have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some aspects, one or more of the most important method steps may be performed by such an apparatus.

In the forgoing, the present disclosure has been described with reference to the exemplary aspects of the present disclosure, but those skilled in the art may appreciate that the present disclosure may be variously corrected and changed within the range without departing from the spirit and the area of the present disclosure described in the appending claims.

## Claims

1. An apparatus for measuring a hydraulic pressure of a cleaning liquid sprayed from a battery cleaning process equipment, the apparatus comprising:
a housing having a shape corresponding to a shape of a battery cell, the housing including an interior space;
a sensor assembly on an outer surface of the housing, the sensor assembly configured to sense the hydraulic pressure of the cleaning liquid; and
a controller in the interior space of the housing, the controller configured to collect hydraulic pressure sensing data from the sensor assembly.

2. The apparatus of claim 1, wherein the sensor assembly includes:
a plurality of hydraulic pressure sensors; and
a sensor support structure, wherein the plurality of hydraulic pressure sensors are coupled to the sensor support sturcture.

3. The apparatus of claim 2, wherein the the sensor support structure is configured to surround the outer surface of the housing.

4. The apparatus of claim 3, wherein the sensor support structure includes an upper part, a lower part, and a side part, and
wherein the plurality of hydraulic pressure sensors are coupled to each of the upper part, the lower part, and the side part.

5. The apparatus of claim 2, wherein the sensor support structure is made of elastic material.

6. The apparatus of claim 2, wherein the sensor support structure is a planar structure or a net structure.

7. The apparatus of claim 2, wherein the plurality of hydraulic pressure sensors form a pattern and each of the plurality of hydraulic pressure sensors is coupled to a predefined position on the sensor support structure to form the pattern.

8. The apparatus of claim 2, wherein the sensor assembly further includes a connector, wherein the connector is electrically connected to the plurality of hydraulic pressure sensors, and
wherein the connector extends a through hole in a side of the housing, and wherien the connector is electrically connected to the controller.

9. The apparatus of claim 1, further comprising a control board which in the interior space of the housing, wherein the controller is coupled to the control board.

10. The apparatus of claim 9, wherein the control board is fixed to an inner surface of the housing by a guide rail configured such that the control board slides along the guide rail.

11. The apparatus of claim 1, further comprising a power supplier in the interior space of the housing,
wherein the power supplier includes:
a battery; and
a wireless charge device configured to charge the battery.

12. The apparatus of claim 1, further comprising a wireless communication modulein the interior space of the housing, wherein the wireless communication module is configured to transmit the hydraulic pressure sensing data to an external hydraulic pressure analysis apparatus.

13. A hydraulic pressure analysis system for battery cleaning process equipment, comprising:
a hydraulic pressure measurement apparatus having a shape corresponding to a shape of a battery cell and equipped with a plurality of hydraulic pressure measuring sensors on an outer surface of the hydraulic pressure measuremetn apparatus; and
a hydraulic pressure analysis apparatus configured to receive hydraulic pressure sensing data from the hydraulic pressure measurement apparatus and configured to diagnose whether there is an abnormality in the battery cleaning process equipment.

14. The hydraulic pressure analysis system of claim 13, wherein the hydraulic pressure analysis apparatus is configured to generate hydraulic pressure information for each coordinate on an outer surface of the hydraulic pressure measurement apparatus based on the received hydraulic pressure sensing data and identifiers of respective hydraulic pressure measuring sensors.

15. The hydraulic pressure analysis system of claim 14, wherein the hydraulic pressure analysis apparatus is configured to diagnose abnormalities in the battery cleaning process equipment based on the hydraulic pressure information for each coordinate.
